# DEMANDE DE BREVET EUROPEEN

(11) **EP 0 609 148 A1**
(43) Date de publication de la demande: **03.08.1994**
(21) Numéro de dépôt: 94400172.6
(22) Date de dépôt: 27.01.1994
(51) Int. Cl.: A01G 9/10, A01C 11/02, B65G 47/90

(54) **Machine automobile de manutention de pots notamment pour exploitations agricoles ou horticoles**

(30) Priorité: 28.01.1993 FR 9300847
(71) Demandeur: A.C.R., Société à Responsibilité Limitée, F-49150 Chevire le Rouge (FR)
(72) Inventeur: Dandeville, Denis, F-49150 Chevire le Rouge (FR)
(74) Mandataire: Gayraud, René

(57) **Abrégé**

Machine de manutention de pots, notamment de fleurs ou plantes servant de porte outils caractérisé en ce qu'elle est constituée d'un châssis (1) monté sur des roues (2) pouvant être chenillées ou sur rail à la partie supérieure duquel peut coulisser longitudinalement une première structure (4) comportant deux montants verticaux (4) en forme de "T" réunis par une entretoise (4₂) sur lesquels peut se déplacer verticalement une seconde structure (5) comportant, deux montants verticaux avec entretoise servant à leurs extrémités (5₃) à la fixation de porte outils de préhension et de manipulation des pots (6).

## Description

La présente invention a pour objet une machine automobile destinée à être utilisée dans les exploitations agricoles, horticoles par les pépiniéristes ainsi que dans les exploitations faisant de la culture hors sol, et permettant la réalisation de plusieurs opérations concernant particulièrement les cultures en pots, à savoir :
- la pose des pots sur le sol
- la coupe à l'horizontale
- la coupe en forme boule
- le griffage de la surface des pots
- la dépose d'engrais solides ou liquides
- le traitement par poudrage ou liquide en partie supérieure ou sous les feuilles.
- Hersage et désherbage du sol.
- Forage d'empreinte pour le placement des pots dans le sol.
- Distançage.
- Ramassage des pots.

Dans les exploitations horticoles, par exemple, pour la culture de fleurs, on dispose dans chaque pot à fleur, une graine ou une bouture; les pots sont ensuite posés sur le sol qui a été au préalable planifié, et espacés par exemple de 20 centimètres les uns des autres, pour former des plates bandes d'environ 1,80 mètre de large sur 200 mètres de longueur.

De telles plates bandes représentent environ 8 000 pots de fleurs. Au bout de quelques semaines les plantes ayant poussées, elles doivent être espacées les unes des autres, proportionnellement à la place qu'elles nécessitent pour s'épanouir. En outre, très souvent elles doivent être taillées.

Actuellement, ces différentes opérations sont effectuées manuellement par des ouvriers qui prennent chaque pot, taillent éventuellement la plante, redéposent le pot sur le sol à un nouvel endroit. Ces manipulations sont longues et entraînent de gros frais d'exploitation.

On a essayé de remédier à ces inconvénients en disposant les pots de fleurs dans des dispositifs statiques comportant des organes de réception (porte-pots) reliés les uns aux autres par des emballages pouvant pivoter les uns par rapport aux autres comme décrit dans le brevet français 15856/7 (ENGLERT et DABRITZ) ou bien dans des porte-pots montés sur des tubes télescopiques pouvant coulisser perpendiculairement sur des poutrelles parallèles comme décrit dans le brevet français 2666488 (BENOIST). D'autres dispositifs de dépotage et d'espacement des pots ont également été réalisés, qui sont également statiques, et destinés à travailler sur des convoyeurs situés dans des locaux de manutention, cf. EP-373872 (N.R.D.C.) NL 7900943 (STICHTING INSTITUUT) GB2156762 (STEWART SYSTEMS Inc.).

Ces dispositifs présentent l'inconvénient de nécessiter pour les grandes exploitations, d'une infrastructure lourde et coûteuse. Dans l'exemple précité de 8.000 pots de fleurs, l'utilisation des dispositifs décrits dans les brevets sus mentionnés est impossible parce que nécessitant un investissement considérable.

La présente invention a pour objet de remédier à ces inconvénients par la réalisation d'une machine autonome, se déplaçant sur le terrain à l'air libre au-dessus des pots de fleurs, disposés sur le sol; comportant des dispositifs de préhension des dits pots, permettant de les soulever, et de les redéposer en les espaçant, après taillage et traitement éventuel de la plante, ladite machine étant conduite par un seul ouvrier.

Bien entendu, la machine selon l'invention permet d'enlever les pots lorsque la maturation est obtenue. Il est évident que le gain de temps pour traiter de grandes quantités de pots est considérable de même que l'économie réalisée.

La machine selon l'invention est caractérisée en ce qu'elle est constituée d'un châssis monté sur des roues pouvant être chenillées ou montées sur des rails, entraînées par un moteur fournissant en outre l'énergie nécessaire au fonctionnement de ces divers organes, à la partie supérieure du dit châssis peut coulisser longitudinalement, c'est-à-dire d'avant en arrière, une première structure comportant deux montants verticaux en forme de "T" réunis par une entretoise; sur ces montants peut se déplacer verticalement une seconde structure formée de deux montants réunis également par une entretoise, I'extrémité des branches de cette seconde structure portant les attaches pour les dispositifs de manipulation des pots. Ces dispositifs sont au nombre de deux :
- **Le premier** comporte une barre de section carrée recevant des chariots portant les outils de préhension de pots pouvant coulisser sur ladite barre à laquelle ils sont rendus solidaires par tout moyen connu, le dit coulissement étant obtenu au moyen de câbles commandés par la rotation d'un plateau de répartition disposé sur le dessus de la barre; la machine selon l'invention est caractérisée en outre en ce que le plateau de répartition comporte un certain nombre de gorges concentriques destinées à recevoir les câbles de manière à obtenir pour un angle de rotation donné différents développements ou déplacements des câbles donc des chariots portant les organes de préhension des pots.
- **Le second** comporte une barre transversale recevant des supports permettant la rotation des outils de préhension, autour d'un axe vertical, d'un angle de 180°. Le dispositif de rotation peut être commandé soit par câble, soit au moyen d'engrenages; cette rotation des outils de préhension permet de reposer les pots sur le sol côte à côte, à bords touchants, dans les deux sens c'est-à-dire sans opérer de distançage. Cet ensemble est remarquable puisqu'il permet le déplacement vertical des pots, leur écartement ou rapprochement et éventuellement leur dépose sur un tapis d'évacuation.

L'ensemble formé par le plateau de répartition avec les câbles, les poulies de renvoi desdits câbles, les barres avec les chariots portant les outils de préhension peuvent se déplacer transversalement sous l'action d'un vérin agissant sur le support sur lequel sont fixés ledit plateau de répartition et les éléments précités, ceci pour permettre la pose ou la reprise des pots disposés en quinconce.

La machine selon l'invention est également caractérisée en ce que l'on peut disposer entre les poutres formant le châssis et les structures un ou plusieurs convoyeurs sans fin un dispositif destiné à tailler éventuellement les plantes, et un dispositif de sous-solage du terrain.

De même, on peut utiliser la machine selon l'invention pour poser seulement les pots sur le sol. Dans ce cas, la barre avec les outils de préhension est remplacée par une autre barre identique mais ayant une largeur double permettant de disposer simultanément les pots sur deux plates bandes mitoyennes.

De plus, un dispositif de répartition des pots avec une possibilité d'accumulation de ceux-ci sur les convoyeurs est prévu afin d'éviter l'engorgement du dispositif de préhension des pots.

D'autres caractéristiques et avantages de l'invention apparaîtront à la lecture de la description qui suit d'une réalisation préférée de l'invention et à l'examen des dessins annexés sur lesquels :

La figure 1 est une vue schématique en perpective de la machine selon l'invention.

La figure 2 est une vue éclatée schématique montrant une variante de montage des outils de préhension des pots.

La figure 3 est une vue d'un plateau à gorges commandant le dispositif de préhension des pots.

Les figures 4 à 6 sont des schémas montrant la cinématique de fonctionnement de la machine.

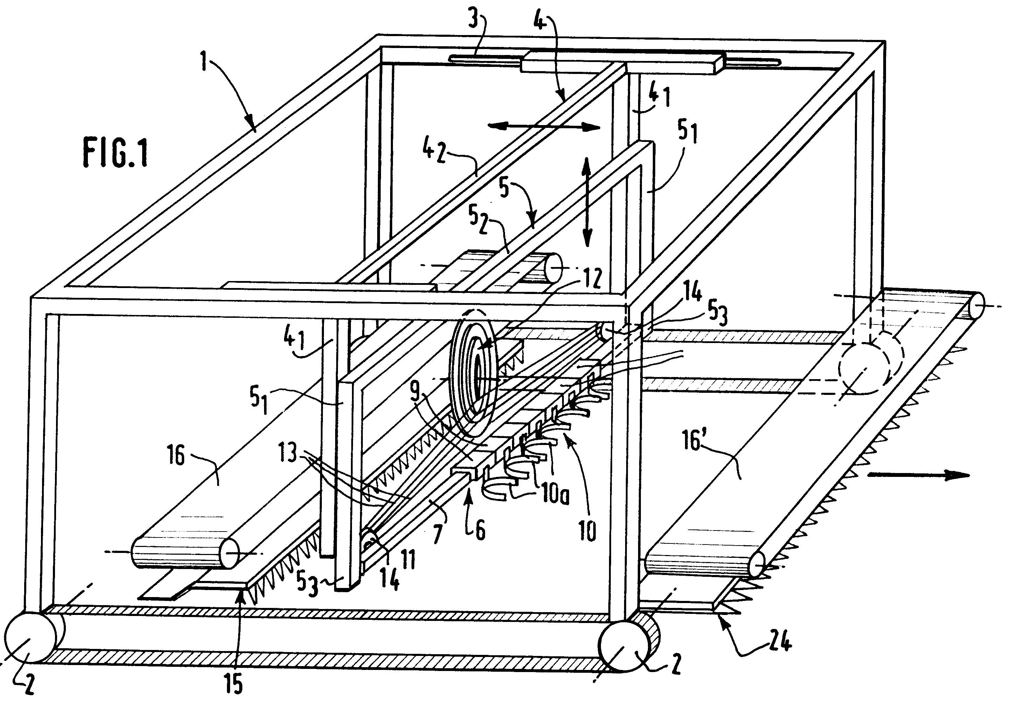

En se reportant à la figure 1 montrant schématiquement la machine selon l'invention, on voit qu'elle est constituée d'un châssis 1 monté sur des roues d'entraînement 2. L'écartement de ces roues d'entraînement correspond à la largeur des plates bandes à traiter; le châssis 1 est constitué de tubes soudés pour former un parralépipède; ce châssis 1 porte un moteur non représenté, permettant le déplacement de la machine et délivrant l'énergie nécessaire au fonctionnement des différents organes, des moyens de commandes étant prévus pour la réalisation des différentes opérations à effectuer.

A la partie supérieure du châssis 1, de chaque côté, sont ménagés deux glissières 3 dans lesquelles peut coulisser longitudinalement une première structure 4 formée de deux montants verticaux 4₁ en forme de "T" réunis par une entretoise 4₂. Sur les montants verticaux 4₁ précités peut se déplacer verticalement une seconde structure 5 constituée de deux montants verticaux 5₁ réunis également par une entretoise 5₂ . L'extrémité 5₃ de chaque montant vertical 5₁ porte le dispositif proprement dit de manipulation 6 des pots; ce dispositif 6 se compose d'une barre 7 de section carrée fixée entre les branches 5₃ de la structure 5, sur cette barre 7 sont disposés des chariots 9 portant des organes de préhension 10 des pots. Les chariots 9 peuvent se déplacer transversalement le long de la barre 7; ce déplacement transversal est obtenu au moyen de câbles 13, solidaires des chariots 7, lesdits câbles 13 passant sur un plateau 12 disposé sur le dessus de la barre.

Le plateau 12, les câbles 13, les poulies 14, la barre 7, les chariots 9 avec les dispositifs de préhension 10 sont montés sur un support télescopique (non représenté) pouvant coulisser transversalement sous l'action d'un vérin afin de permettre la pose et la dépose en quinconce des pots.
L'ensemble peut être disposé dans un caisson entre les branches 5₃ de la machine.

Chaque chariot 7 est commandé par un câble 13 auquel il est solidaire. Le dispositif de préhension 10 est formé d'une fourche 10 A venant prendre appui sous le rebord des pots.

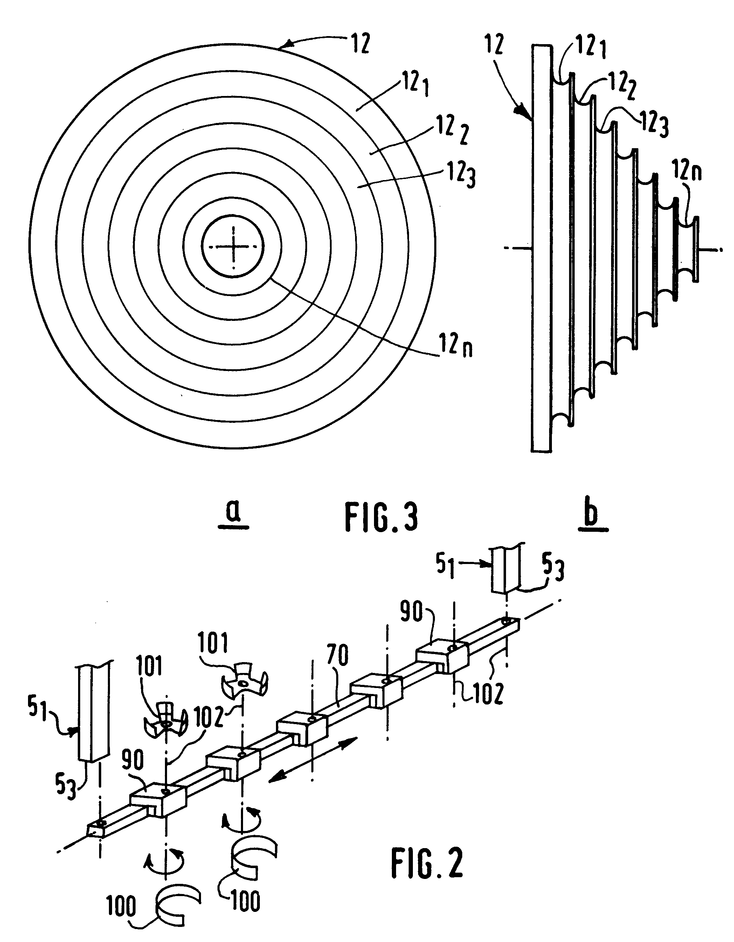

Ce dispositif de manipulation des pots peut être remplacé par celui représenté sur la figure 2 permettant le déplacement vertical des pots, leur écartement ou rapprochement et après rotation leur dépose soit sur un tapis d'évacuation, soit sur le sol côte à côte, dans distançage.

Ce second dispositif se compose d'une barre 70 de section carrée fixée entre les branches 5₁, à leur extrémité 5₃; sur cette barre 70 sont disposés un certain nombre de chariots 90 portant des organes de préhension des pots 100, fixés sur un tourniquet 101, pouvant pivoter autour d'un axe vertical 102. Les chariots porte outils 90 peuvent coulisser transversalement sur la barre 70 sous l'action des câbles 13, passant sur le plateau de répartition 12.

La rotation des tourniquets 101 peut être obtenue également au moyen de câbles ou d'engrenages, non représentés sur la figure.

Comme représenté sur la figure 3, le plateau 12 comporte un certain nombre de gorges 12₁, 12₂, 12₃, etc... de diamètre différent. Chaque câble 13 solidaire par ses extrémités d'un chariot 7, après être passé sur des poulies de renvois 14 , de manière connue, passe dans une des gorges 12₁, 12₂, du plateau 12 et s'enroule autour de celle-ci de manière à faire un tour complet.

Lorsque le plateau 12 tourne, le déplacement angulaire des câbles est identique mais le développement des gorges étant différent le déplacement de chaque câble sera différent et de ce fait les chariots 7 seront plus ou moins écartés les uns des autres.

Afin d'éviter l'engorgement du dispositif de préhension des pots un système d'accumulation des pots et de libération et d'espacement est prévu sur le convoyeur. Ce dispositif est constitué de palpeurs régulièrement espacés et disposés sous chaque dispositif de préhension, commandant, en cascade, plusieurs versions d'espacement dont les tiges bloquent ou libèrent les pots, sur le convoyeur. Par exemple, I'arrivée d'un premier pot sur le palpeur de tête provoque l'envoi d'air comprimé dans le premier vérin dont la tige avance et bloque le second pot celui-ci agit à son tour sur le micro distributeur provoquant l'envoi d'air comprimé dans le vérin suivant dont la tige bloque également l'arrivée d'un autre pot sur le convoyeur et ainsi de suite jusqu'au moment où les pots sont pris par le dispositif de préhension, et libèrent le convoyeur, le cycle recommence alors.

On peut disposer également la barre de coupe horizontale 24 à l'avant de la machine; cette disposition permet de positionner à l'intérieur de la machine des barres de coupe verticales et orientables pour produire une coupe dite "avec effet boule".

De même dans l'exemple représenté, on a disposé en partie centrale de la machine une herse 15 pour égalisation et désherbage du sol.

Dans l'exemple représenté on n'a pas fait figurer tous les organes de commande, de régulation dont la réalisation ne présente aucune difficulté pour l'homme de l'art.

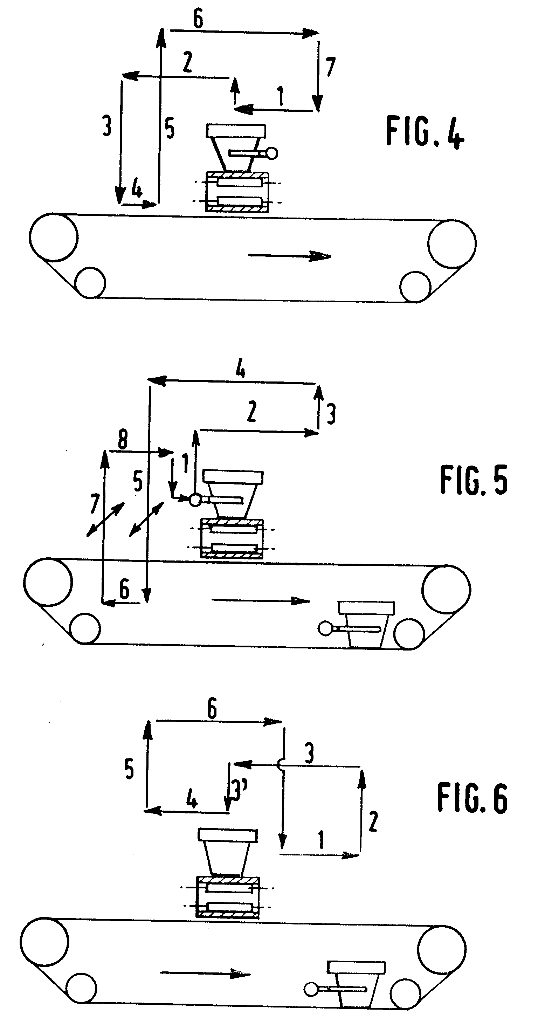

Sur les figures 4 à 6 on a représenté la cinématique de la machine pour les opérations suivantes :

Pose des pots sur le sol : FIG. 4

La machine avance, les pots arrivent transversalement sur un tapis roulant. Chaque pot est pris par basculement ou avance du chariot 9 et de son outil de préhension 10 et ensuite déposé sur le sol.

Distançage et coupe : FIG 5

L'outil de préhension 10 étant descendu la machine avance et prend le pot, le soulève et le translate vers le dispositif de coupe 15, après le pot est redescendu vers le sol; lors de cette opération le plateau de répartition 12 tourne et provoque l'écartement des organes de préhension 10 espaçant ainsi les pots redéposés sur le sol.

Ramassage des pots: FIG. 6

Les organes de préhension 10 étant descendus la machine avance et chaque pot est prélevé sur le sol et déposé sur un tapis roulant d'évacuation 16 par déplacement vertical de la barre 7 et de ses chariots 9 porte outils de préhension ou par rotation de ceux-ci autour d'un axe vertical. Les organes de préhension 10 reprennent ensuite leur position initiale. On peut procéder au sous-solage du terrain avec le dispositif 15 prévu à cet effet pendant l'avance lors de la pose des pots sur le sol (FIG.4) ou pendant la coupe ou traitement de la plante (FIG. 5) ou pendant l'enlèvement des pots (FIG. 6).

Bien entendu, la machine selon l'invention peut être utilisée avec un ou plusieurs tapis roulants, pour l'enlèvement de pots et la pose de nouveaux pots simultanément, après sous solage du terrain.

## Revendications

**1 -** Machine automobile de manutention de pots, notamment de fleurs ou plantes servant de porte outils permettant la réalisation de plusieurs opérations constituées d'un châssis (1) monté sur des roues (2) pouvant être chenillées entraînées par un moteur fournissant par ailleurs l'énergie nécessaire au fonctionnement des divers organes, caractérisée en ce qu'elle est constituée d'une première structure (4) pouvant coulisser longitudinalement sur ledit châssis comportant deux montants verticaux (4) en forme de "T" réunis par une entretoise (42) sur lesquels peut se déplacer verticalement une seconde structure (5) comportant deux montants verticaux avec entretoise servant à leurs extrémités (53) à la fixation de porte outils de préhension et de manipulation de pots (6), comprenant un dispositif de déplacement transversal des porte-outils, un dispositif d'espacement et d'accumulation des pots sur les convoyeurs situés devant les outils de préhension.

**2 -** Machine de manutention de pots selon 1 caractérisée en ce que le dispositif de manipulation des pots (6) se compose d'outils de préhension (10) montés sur des chariots mobiles (9) pouvant coulisser transversalement sur une barre (7), commandés au moyen d'un câble (13) s'enroulant sur un plateau de répartition (12) disposé au-dessus de cette barre.

**3 -** Machine de manutention de pots selon 2 caractérisée en ce que le plateau de répartition (12) comporte plusieurs gorges (12₁-12₂) destinées à recevoir chacune un câble (13) commandant un chariot (9), le déplacement différentiel de chacun d'eux étant obtenu par le développement différent de chaque gorge (12).

**4 -** Machine de manutention de pots selon 1 caractérisé en ce que le dispositif de manipulation des pots se compose d'outils de préhension (10) rotatifs autour d'un axe vertical (102), commandés soit par un système de crémaillère, soit au moyen de câbles.

**5 -** Machine de manutention de pots selon 2 et 3 caractérisé en ce que l'ensemble formé par le plateau de répartition (12) les câbles (13) les poulies de renvoi (4) les lames (7) avec les outils de préhension (10) sont montés sur un support télécospique pouvant coulisser transversalement sous l'action d'un vérin afin de permettre la pose et la dépose en quinconce.

**6 -** Machine de manutention de pots selon 1 caractérisé en ce que le dispositif d'espacement et d'accumulation des pots, prévu sur le ou les convoyeurs et constitué de palpeurs régulièrement espacés et disposés sous chaque dispositif de préhension, commandant, en cascade, plusieurs vérins d'espacement dont les tiges bloquent ou libèrent les pots, sur le convoyeur.

**7 -** Machine de manutention de pots selon 4, caractérisé en ce que le dispositif de préhension des pots (10) rotatif autour d'un axe vertical (102 comporte un support rotatif multiple permettant la coupe "boule" et le griffage du dessus des pots et le traitement sous et sur les feuilles.

**8 -** Machine de manutention de pots selon 1 caractérisée en ce que le châssis (1) et les structures mobiles (4-5) sont réalisés de manière telle que plusieurs convoyeurs sans fin puissent amener ou évacuer des pots et/ou des déchets.

**9 -** Machine de manutention de pots selon 1 caractérisée en ce qu'elle est mobile, autonome et permet le hersage, le désherbage, le traitement des plantes pendant les diverses opérations de manipulations.
